# EUROPEAN PATENT SPECIFICATION

(11) **EP 4 332 179 B1**
(45) Date of publication and mention of the grant of the patent: **23.09.2026**
(21) Application number: 22870135.5
(22) Date of filing: 01.08.2022
(51) Int. Cl.: G02B 1/18, G02B 1/14, C09D 4/00, C09D 5/00, C09D 5/16, C09D 7/40, C09D 7/63, C09D 183/04, C09D 183/08, C08J 5/18, C08J 7/04, C08J 7/046, C08J 7/054, C08J 7/18, C08G 77/24

(54) **COATING FILM, COATING COMPOSITION, AND DISPLAY DEVICE**
BESCHICHTUNGSFILM, BESCHICHTUNGSZUSAMMENSETZUNG UND ANZEIGEVORRICHTUNG
FILM DE REVÊTEMENT, COMPOSITION DE REVÊTEMENT ET DISPOSITIF D'AFFICHAGE

(30) Priority: 14.09.2021 KR 20210122469
(43) Date of publication of application: 06.03.2024
(73) Proprietor: Kolon Industries, Inc., Seoul 07793 (KR)
(72) Inventor: AHN, Sang-Hyun, Seoul 07793 (KR); YANG, Pil Rye, Seoul 07793 (KR)
(74) Representative: Ter Meer Steinmeister & Partner
(86) International application number: PCT/KR2022/011278
(87) International publication number: WO 2023/043048

(56) References cited:
- WO-A1-2021/137481
- CN-A- 101 817 928
- CN-A- 102 040 619
- CN-A- 108 129 938
- CN-A- 108 517 161
- CN-B- 102 040 619
- JP-A- 2000 275 403
- KR-A- 20180 131 456
- KR-A- 20210 081 872
- WOJCIK ANNA B. ET AL: "Transparent organic/inorganic hybrid sol-gel materials based on perfluorinated polymers and silica", PROCEEDINGS OF SPIE, vol. 2611, 15 January 1996 (1996-01-15), PO Box 10 Bellingham WA 98227-0010 USA, pages 172 - 177, XP093047815, ISSN: 0277-786X, DOI: 10.1117/12.230107
- WOJCIK ANNA B., KLEIN LISA C.: "Transparent organic/inorganic hybrid sol-gel materials based on perfluorinated polymers and silica", LASER-BASED MICRO- AND NANOPACKAGING AND ASSEMBLY II, SPIE, vol. 2611, 15 January 1996 (1996-01-15), pages 172 - 177, XP093047815, ISSN: 0277-786X, DOI: 10.1117/12.230107

## Description

### [Technical Field]

The present disclosure relates to a coating film, a coating composition and a display device.

### [Background Art]

A light-transmitting film is a core material of optical and flexible displays and the importance thereof is increasing. In particular, the light-transmitting film is used as a material to replace glass in the display field due to lightness, processability, and flexibility. In general, a light-transmitting film is known to have lower surface hardness and abrasion resistance than glass. For this reason, research to improve the abrasion resistance of the light-transmitting film is conducted in order to apply the light-transmitting film to the display field.

In an approach to improve the mechanical or optical properties of the light-transmitting film, a coating layer may be disposed on the surface of the light-transmitting film. The light-transmitting film on which the coating layer is disposed is also called a "coating film".

Meanwhile, methods for inputting information using a touchscreen in an electronic device such as a portable personal digital assistant have recently been widely used. However, when information is directly input on the surface of the electronic device or the display device using a hand or a pen, the surface of the electronic device or the display device touched by the hand or the pen may be contaminated.

Accordingly, there is a need for a light-transmitting film or coating film having excellent abrasion resistance, resistance to stains caused by the touch of the hand or pen, or excellent stain removal properties.

CN 108 517 161 A relates to a superhydrophobic and super-oleophobic coating and a preparation method thereof. The preparation method comprises the following steps: (1) stirring a mixture of water, an inorganic weak base, a diol homologous compound, an alkylphenol ethoxylate emulsifier, a sulfonate and/or sulfate type anionic emulsifier, a crosslinking monomer and a crosslinking initiator to obtain milk-white stable pre-emulsion; (2) reacting the milk-white stable pre-emulsion for 1 to 8 hours at 40 to 90 °C, decreasing the temperature and regulating the pH value to 7 to 8 with ammonia water to obtain silicone acrylic emulsion; (3) uniformly stirring the silicone acrylic emulsion, an alcohol solvent, ethyl orthosilicate and ammonia water, heating to 40 to 80 °C and performing reaction for1 to 10 hours to obtain co-hydrolyzed condensed suspension; (4) adding perfluoroalkyl triethoxysilane and/or perfluoroalkyl trimethoxysilane into the co-hydrolyzed condensed suspension, and performing reaction for 0.5 to 8 hours at 50 to 70 °C to obtain the superhydrophobic and super-oleophobic coating. The superhydrophobic and super-oleophobic coating is easy to prepare and has high super-hydrophobicity and super-oleophobicity. Wojcik Anna B. ET AL. ("Transparent organic/inorganic hybrid sol-gel materials based on perfluorinated polymers and silica", Proceedings of SPIE, vol. 2611, 15 January 1996, pages 172-177, XP093047815, DOI: 10.1117/12.230107) relates to the preparation of two types of hybrid gels based on silica and perfluorinated polymers. The first type involves a perfluorinated polymer containing acrylate groups. Perfluoropolyether diol diacrylate (PFDA) was functionalized by reacting it with (3-mercapto-propyl) trimethoxysilane by a Michael addition. The resulting silyl derivative (PFDAS) was able to copolymerize with a silica precursor, tetraethylorthosilicate (TEOS), resulting in perfluorinated polymer/silica hybrid gels. For the second type, perfluoroalkylsilane (FAS), vinyltriethoxysilane (VTES), and TEOS were polymerized in one step. In both cases, the gels were transparent, crack-free and water repellent. Since the inorganic and organic components are covalently bonded to each other, these materials can be classified as organic/inorganic copolymers.

### [Disclosure]

### [Technical Problem]

Therefore, the present disclosure has been made in view of the above problems, and it is one aspect of the present disclosure to provide a coating film having excellent abrasion resistance and scratch resistance and excellent anti-pollution properties reflected in a large water contact angle, that is maintained even after scratching and provides excellent stain resistance.

According to the invention, there is provided a coating composition that can be used in the manufacture of the coating film having the characteristics.

### [Technical Solution]

The invention is defined in the appended claims.

According to the invention there is provided a coating composition including a silane compound and a polymerization curing aid, wherein the silane compound includes a first silane compound represented by the following Formula 1, a second silane compound represented by the following Formula 2, and a third silane compound represented by the following Formula 3, and the polymerization curing aid includes a diol and water (H₂O).

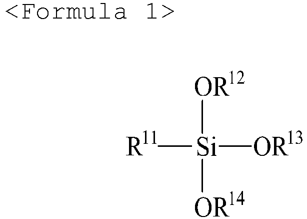

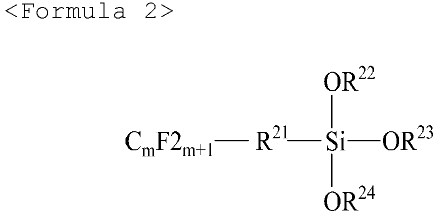

<Formula 3> Si(OR³)₄

wherein R¹¹ is a substituted or unsubstituted C2-C5 unsaturated hydrocarbon group, R¹², R¹³ and R¹⁴ are each independently a C1-C5 alkyl group, R²¹ is a single bond or a C1-C4 alkylene group, R²², R²³ and R²⁴ are each independently a C1-C5 alkyl group, m is an integer of 3 to 10, and R³ is a C1-C4 alkyl group.

The molar ratio of the silane compound to the polymerization curing aid may be within the range of 1:1.2 to 1:1.8.

According to the invention, the silane compound includes 80 to 90 mol% of the first silane compound, 1 to 5 mol% of the second silane compound, and 7 to 15 mol% of the third silane compound, based on the total number of moles of the silane compound.

The first silane compound may include vinyltrimethoxysilane represented by the following Formula 4:

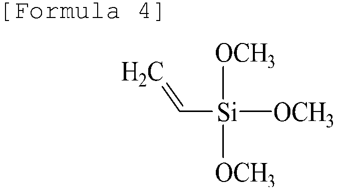

The second silane compound may include at least one selected from 1H,1H,2H,2H-perfluoro-octyltriethoxysilane, 1H,1H,2H,2H-perfluoro-octyltrimethoxysilane, 1H,1H,2H,2H-perfluoro-decyltrimethoxysilane and 1H,1H,2H,2H-perfluoro-decyltriethoxysilane.

The third silane compound may include at least one of tetraethyl orthosilicate (TEOS) and tetramethyl orthosilicate (TMOS).

The diol may include at least one of ethylene glycol, 1,3-propanediol, and 1,4-butanediol.

The coating composition may further include a basic catalyst.

The coating composition may include 0.05 to 0.1 parts by weight of the basic catalyst based on 100 parts by weight of the total silane compound.

In accordance with another aspect of the present disclosure, provided is a coating film including a base film and a coating layer formed on the base film using the coating composition.

In accordance with another aspect of the present disclosure, provided is a display device including a display panel and the coating film disposed on the display panel.

### [Advantageous Effects]

The coating layer according to an embodiment of the present disclosure has a perfluoro group and thus exhibits excellent wear resistance, scratch resistance and stain resistance.

The coating film including the coating layer according to an embodiment of the present disclosure may have a large water contact angle and a large water contact angle after scratching. Accordingly, the coating film according to an embodiment of the present disclosure can exhibit excellent slip, stain resistance and stain removal properties.

According to an embodiment of the present disclosure, the coating layer prepared from the coating composition including the polyfunctional silane compound exhibits excellent wear resistance and scratch resistance. The coating film including such a coating layer according to an embodiment of the present disclosure exhibits excellent abrasion resistance and scratch resistance. In addition, the coating layer of the coating film according to an embodiment of the present disclosure exhibits excellent flexibility.

The display device in which the coating film according to an embodiment of the present disclosure is attached to a display surface of a display panel can exhibit excellent surface contamination prevention and removal properties, superior abrasion resistance and scratch resistance, and excellent flexibility.

### [Description of Drawings]

FIG. 1 is a schematic cross-sectional view illustrating a coating film according to an embodiment of the present disclosure.
FIG. 2 is a schematic cross-sectional view illustrating measurement of a water contact angle.
FIG. 3 is a schematic cross-sectional view illustrating measurement of curl.
FIG. 4 is a schematic diagram illustrating a process of measuring a crack point radius (R).
FIG. 5 is a cross-sectional view of a part of a display device according to an exemplary embodiment.
FIG. 6 is an enlarged cross-sectional view of the part "P" of FIG. 5.

### [Best Mode]

Hereinafter, embodiments of the present disclosure will be described in detail with reference to the accompanying drawings. However, the following embodiments are illustratively provided merely for clear understanding of the present disclosure, and do not limit the scope of the present disclosure.

In the case in which a term such as "comprise", "have", or "include" is used in the present specification, another part may also be present, unless "only" is also used. Terms in a singular form may include the plural meanings, unless noted to the contrary. Also, in construing an element, the element is to be construed as including an error range, even if there is no explicit description thereof.

In describing a positional relationship, for example, when the positional relationship is described using "on", "above", "below", or "next to", the case of no contact therebetween may be included, unless "immediately" or "directly" is used.

In describing temporal relationships, for example, when a temporal order is described using "after", "subsequent", "next", or "before", the case of a non-continuous relationship may be included, unless "immediately" or "directly" is used.

It will be understood that, although the terms "first", "second", etc. may be used herein to describe various elements, these elements are not limited by these terms. These terms are only used to distinguish one element from another. Therefore, a first element could be termed a second element within the technical idea of the present disclosure.

It should be understood that the term "at least one" includes all combinations related with one or more items. For example, "at least one among a first element, a second element, and a third element" may include all combinations of two or more elements selected from among the first, second, and third elements, as well as each of the first, second, and third elements.

Features of various embodiments of the present disclosure may be partially or completely integrated or combined with each other, and may be variously interoperated with each other and driven technically. The embodiments of the present disclosure may be carried out independently from each other, or may be carried out together in an interrelated manner.

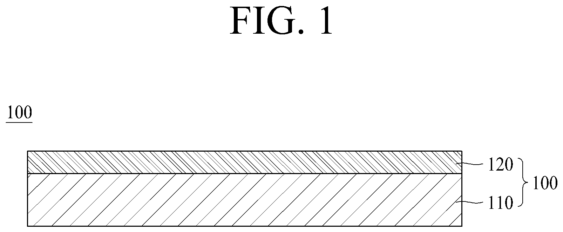

FIG. 1 is a schematic cross-sectional view of a coating film 100 according to an embodiment of the present disclosure.

Referring to FIG. 1, the coating film 100 according to an embodiment of the present disclosure includes a base film 110 and a coating layer 120 disposed on the base film 110.

A light-transmitting film may be used as the base film 110. A polyimide (PI)-based film including a polyimide film and a polyamide-imide film may be used as the light-transmitting film. However, one embodiment of the present disclosure is not limited thereto and a polycarbonate (PC) film , a polyacrylic film, a polyethylene terephthalate film, a cellulose film, or the like may be used as the base film 110.

According to the invention, the coating layer 120 is formed using a coating composition including a silane compound and a polymerization curing aid. The coating layer 120 formed of the coating composition including the silane compound and the polymerization curing aid includes a siloxane resin.

According to an embodiment of the present disclosure, a perfluorinated silane compound is used to form the coating layer 120. A perfluoro group included in the perfluorinated silane compound may be disposed on the coating layer. As a result, the perfluoro group may affect the physical properties of the surface of the coating layer 120.

According to an embodiment of the present disclosure, the coating layer 120 may have excellent abrasion resistance, scratch resistance, stain resistance and flexibility. As a result, the coating film 100 including the coating layer 120 may exhibit excellent abrasion resistance, scratch resistance, stain resistance and flexibility.

According to an embodiment of the present disclosure, the coating layer 120 may have a thickness of 5 to 50 µm. When the thickness of the coating layer 120 is less than 5 µm, the abrasion resistance, scratch resistance and stain resistance of the coating film 100 attributable to the coating layer 120 may not be sufficiently exerted. When the thickness of the coating layer 120 exceeds 50 µm, the thickness of the coating film 100 may be increased and the flexibility of the coating film 100 may be deteriorated.

According to an embodiment of the present disclosure, the coating film 100 may have a water contact angle of 100° or more and a water contact angle after scratching of 98° or more. More specifically, the coating layer 120 of the coating film 100 according to an embodiment of the present disclosure may have a water contact angle of 100° or more and a water contact angle after scratching of 98° or more.

According to an embodiment of the present disclosure, the water contact angle is defined as the angle between the surface of the coating layer 120 and the boundary of water droplet (H₂O) measured after dropping 5 µl of water droplet (H₂O) onto the coating layer 120.

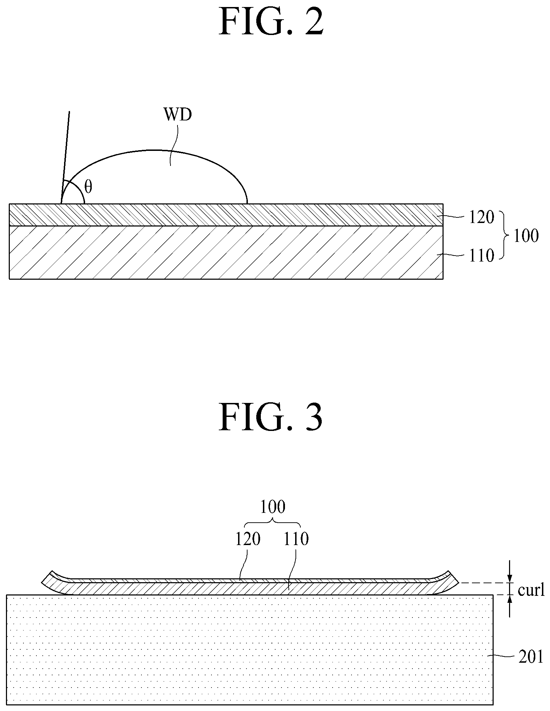

FIG. 2 is a schematic cross-sectional view illustrating measurement of a water contact angle.

According to an embodiment of the present disclosure, as shown in FIG. 2, using an MSA (Mobile Surface Analyzer) from KRUSS GmbH, a 5 µl water droplet (WD) is dropped on the coating layer 120 and then the angle (θ) between the surface of the coating layer 120 and the boundary of the water droplet is measured to obtain a water contact angle. Specifically, a 5 µl water droplet WD is dropped on the surface of the coating layer 120 at a rate of 2.7 µl/sec, the angle θ between the surface of the coating layer 120 and the boundary of the water droplet WD is measured 7 times at an interval of 0.2 seconds, this measurement is repeated 5 times, and the average of the five measured values is set as the water contact angle.

The coating layer 120 of the coating film 100 according to an embodiment of the present disclosure has a water contact angle of 100° or more. The coating layer 120 having a large water contact angle of 100° or more can exhibit excellent slip property. When the coating layer 120 has excellent slip property, stains (contaminants) are not readily adhered or attached to the coating layer 120, so excellent anti-contamination properties can be imparted to the coating layer 120. In addition, when the coating layer 120 has excellent slip property, contaminants adhered or deposited onto the coating layer 120 can be easily removed therefrom. As a result, the coating layer 120 can exhibit excellent contaminant removal properties.

The coating layer 120 of the coating film 100 according to an embodiment of the present disclosure has a water contact angle after scratching of 98° or more.

The water contact angle after scratching is obtained by cutting the coating film 100 into a size of 100 mm x 50 mm to obtain a coating film sample, fixing the coating film sample onto a flat surface using an adhesive tape (3M company) such that the coating layer 120 faces upward, and reciprocating a 20 mm x 20 mm stainless steel (SUS) jig covered with #0000 (LIBERON Corporation) nonwoven fabric on the surface of the coating layer 120 of the coating film sample 10,000 times at a load of 0.5 kgf and a speed of 45 RPM.

In summary, the water contact angle after scratching means a water contact angle measured after scratches are formed on the surface of the coating layer 120 of the coating film 100. An MSA (Mobile Surface Analyzer) from KRUSS GmbH can be used for measurement of the water contact angle after scratching.

Because the coating layer 120 of the coating film 100 according to an embodiment of the present disclosure has a water contact angle after scratching of 98° or more, the surface of the coating layer 120 can exhibit excellent slip property even after exposure to a scratch environment. Therefore, the coating film 100 can exhibit excellent contaminant prevention and removal properties even if the coating layer 120 is exposed to a scratch environment in the process of using the coating film 100.

According to an embodiment of the present disclosure, the difference between the water contact angle of the coating layer 120 and the water contact angle after scratching of the coating layer 120 may be 10° or less.

A small difference between the water contact angle of the coating layer 120 and the water contact angle after scratching of the coating layer 120 indicates that, even if the coating layer 120 is exposed to a scratch environment in the process of using the coating film 100, the water contact angle of the coating layer 120 is not greatly reduced. As such, the coating film 100 according to an embodiment of the present disclosure is not damaged in a scratch environment and is thus highly resistant to the scratch environment. Therefore, the coating film 100 according to an embodiment of the present disclosure has excellent scratch resistance.

According to an embodiment of the present disclosure, the coating layer 120 may have a water contact angle of 100° to 120° and a water contact angle after scratching of 98° to 110°. Alternatively, according to an embodiment of the present disclosure, the coating layer 120 may have a water contact angle of 105° to 120° and a water contact angle after scratching of 100° to 110°. According to an embodiment of the present disclosure, the coating layer 120 may have a water contact angle of 105° to 115°.

The number of scratches of the coating layer 120 of the coating film 100 according to an embodiment of the present disclosure may be two or less.

According to an embodiment of the present disclosure, the number of scratches is obtained by cutting the coating film 100 into a size of 100 mm x 50 mm to obtain a coating film sample, fixing the coating film sample onto a flat surface using an adhesive tape (3M company) such that the coating layer 120 faces upward, reciprocating a 20 mm x 20 mm stainless steel (SUS) jig covered with #0000 (LIBERON Corporation) nonwoven fabric on the surface of the coating layer 120 of the coating film sample 10,000 times at a load of 0.5 kgf and a speed of 45 RPM, and counting the number of scratches by the naked eye.

According to an embodiment of the present disclosure, the coating layer 120 of the coating film 100 may have one or less scratches, or may have no scratch.

According to an embodiment of the present disclosure, even if the coating film 100 undergoes a scratch-inducing process, very few or no scratches are formed. Therefore, the coating film 100 according to an embodiment of the present disclosure has excellent scratch resistance.

When the coating film 100 according to an embodiment of the present disclosure is used as a cover window of a display device, the coating film 100 is exposed to a scratch environment. Since the coating film 100 according to an embodiment of the present disclosure has excellent scratch resistance, even if the coating film 100 is used as a cover window of a display device, almost no scratches may be formed.

According to an embodiment of the present disclosure, the coating layer 120 of the coating film 100 may have a water contact angle after eraser wear of 95° or more.

The water contact angle after eraser wear refers to a water contact angle that is measured by cutting the coating film 100 into a size of 200 mm x 50 mm to obtain a coating film sample, fixing the coating film sample onto a flat surface using an adhesive tape (3M company) such that the coating layer 120 faces upward, fixing a Manaslu eraser to a jig and reciprocating the jig on the surface of the coating layer 120 of the coating film sample 1,000 times at a load of 0.5 kgf and a speed of 45 RPM. An MSA (mobile surface analyzer) from KRUSS GmbH can be used for measurement of the water contact angle after eraser wear.

The coating layer 120 is not greatly damaged even after exposure to a scratch environment because the coating layer 120 of the coating film 100 according to an embodiment of the present disclosure has a water contact angle after eraser wear of 95° or more. Therefore, the coating film 100 according to an embodiment of the present disclosure can exhibit excellent abrasion resistance.

According to an embodiment of the present disclosure, the difference between the water contact angle of the coating layer 120 and the water contact angle after eraser wear of the coating layer 120 may be 10° or less.

A small difference between the water contact angle of the coating layer 120 and the water contact angle after eraser wear of the coating layer 120 indicates that, even if the coating layer 120 is exposed to a scratch environment in the process of using the coating film 100, the water contact angle of the coating layer 120 is not greatly reduced. As such, the coating film 100 according to an embodiment of the present disclosure is not greatly damaged in a scratch environment and thus exhibits excellent abrasion resistance.

According to an embodiment of the present disclosure, the coating layer 120 may have a water contact angle after eraser wear of 95° to 110°. Alternatively, according to an embodiment of the present disclosure, the coating layer 120 may have a water contact angle after eraser wear of 95° to 105°.

According to one embodiment of the present disclosure, the coating film 100 may have a curl of 2 mm or less. For example, the coating film 100 may have a curl of 2 mm or less based on a thickness of 10 µm of the coating layer 120.

Curl is defined as the distance between the edge of the coating film 100 cut into a square having a size of 100 mm x 100 mm placed on a flat glass substrate, and the bottom of the glass substrate.

FIG. 3 is a schematic cross-sectional view illustrating measurement of a curl. The distance indicated by "curl" in FIG. 3, specifically, the distance by which the edge of the sample of the coating film 100 is spaced apart from the bottom of the glass substrate 201 may be referred to as a curl of the coating film 100.

In the process of manufacturing the coating film 100, the coating composition is cured in order to form the coating layer 120 and curl may be formed due to curing shrinkage. When curl occurs, post-processing is difficult due to deformed appearance of the coating film 100, and when curl occurs severely, problems such as peeling of the coating layer 120 may occur.

According to the invention, the coating composition includes a diol, which can maintain the distance between molecules included in the coating composition, and thus curl of the coating film 100 including the coating layer 120 can be prevented.

According to an embodiment of the present disclosure, the coating film 100 may have a curl of 1 mm or less, may have a curl of 0.5 mm or less, and may not have a curl that can be identified with the naked eye.

According to an embodiment of the present disclosure, the coating film 100 may have a crack point radius (R) of 1 mm or less. For example, the coating film 100 may have a crack point radius (R) of 1 mm or less based on a thickness of 10 µm of the coating layer 120.

According to an embodiment of the present disclosure, the crack point radius (R) is obtained by cutting the coating film 100 to a size of 20 mm x 100 mm to prepare a coating film sample, mounting the coating film sample on a radius bending tester such that the coating layer 120 faces away from the bent coating film sample, and measuring the radius of curvature when cracks occur in the coating film sample, while bending the coating film sample by reducing the radius of curvature.

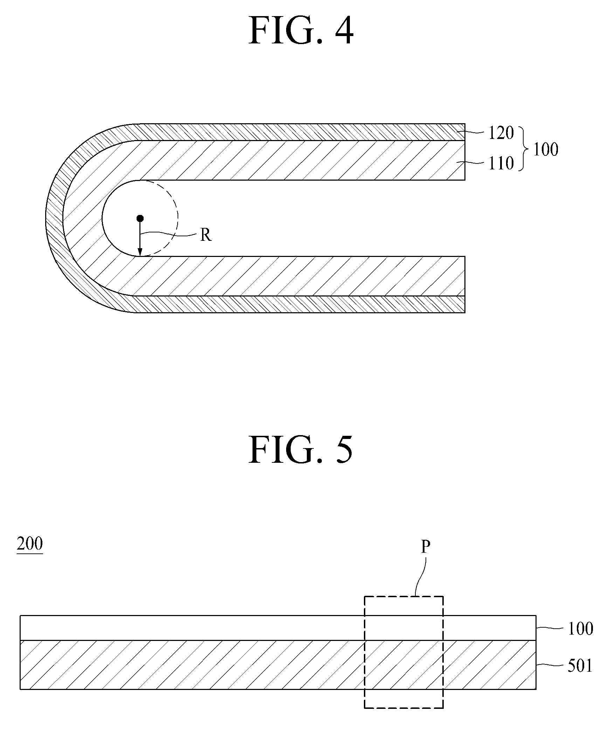

FIG. 4 is a schematic diagram illustrating measurement of the crack point radius (R). As shown in FIG. 4, the sample of the coating film 100 is bent, the bending operation is repeated while reducing the radius of curvature of the bending point, and the radius of curvature measured when a crack occurs in the sample of the coating film 100 is defined as "crack point radius (R)".

According to an embodiment of the present disclosure, the coating film 100 has a very small crack point radius (R) of 1 mm or less and thus exhibits excellent bendability and flexibility.

In particular, according to an embodiment of the present disclosure, since the coating film sample is mounted on the radius bending tester such that the coating layer 120 faces away from the bent coating film sample, the crack point radius (R) is measured under more severe conditions than when the coating layer 120 faces away from the bent coating film sample. Nevertheless, the coating film 100 according to an embodiment of the present disclosure has excellent bendability and flexibility because the coating film 100 according to an embodiment of the present disclosure has a very small crack point radius (R) of 1 mm or less.

More specifically, the coating film 100 according to an embodiment of the present disclosure may have a crack point radius (R) of 0.5 mm or less.

According to the invention there is provided a coating composition that may be used in order to form the coating layer 120 of the coating film 100.

According to the invention, the coating composition includes a silane compound and a polymerization curing aid. The silane compound includes a first silane compound represented by the following Formula 1, a second silane compound represented by the following Formula 2, and a third silane compound represented by the following Formula 3. The polymerization curing aid includes diol and water (H₂O). 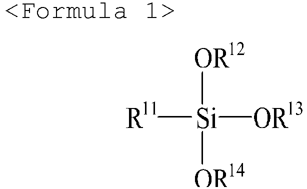
wherein R¹¹ is a substituted or unsubstituted C2-C5 unsaturated hydrocarbon group, and R¹², R¹³ and R¹⁴ are each independently a C1-C5 alkyl group. Here, the unsaturated hydrocarbon group and the alkyl group may be linear, branched or alicyclic, respectively. 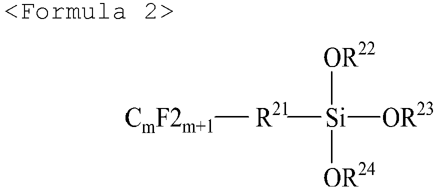
wherein R²¹ is a single bond or a C1-C4 alkylene group, R²², R²³ and R²⁴ are each independently a C1-C5 alkyl group, wherein each of the alkylene group and the alkyl group is a linear, branched or alicyclic group, and m is an integer of 3 to 10.

   <Formula 3> Si(OR³)₄
wherein R³ is a C1-C4 alkyl group, wherein the alkyl group is a linear, branched or alicyclic group.

According to the invention, siloxane is formed using the silane compound. Specifically, the silane compound undergoes polymerization and curing reactions. The coating layer 120 may be formed by polymerization and curing of the coating composition based on polymerization and curing of the silane compound.

The first silane compound represented by Formula 1 has an unsaturated hydrocarbon group and may undergo polymerization reaction. The first silane compound is a main component of the silane compound which plays a key role in polymerizing and curing the coating composition. The coating composition may be smoothly polymerized and cured by the first silane compound.

The first silane compound may include, for example, vinyltrimethoxysilane represented by the following Formula 4.

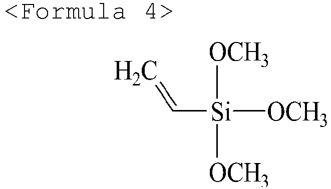

The second silane compound is a silane compound having a perfluoro group. The perfluoro group included in the second silane compound may lower the surface tension of the coating layer 120 to increase the water contact angle of the coating layer 120 and maintain the excellent contact angle after scratching or abrasion.

According to an embodiment of the present disclosure, the coating layer 120 has a large water contact angle to provide excellent slip characteristics, and improve contaminant prevention and removal performance of the coating layer 120, as well as scratch resistance. For this purpose, the coating composition includes the second silane compound represented by Formula 2.

The second silane compound represented by Formula 2 may include at least one selected from 1H,1H,2H,2H-perfluoro-octyltriethoxysilane, 1H,1H,2H,2H-perfluoro-octyltrimethoxysilane, 1H,1H,2H,2H-perfluoro-decyltrimethoxysilane and 1H,1H,2H,2H-perfluoro-decyltriethoxysilane.

The coating layer 120 formed using the coating composition including the second silane compound having a perfluorinated group may have a water contact angle of 100° or more and a water contact angle after scratching of 98° or more. In addition, the coating layer 120 formed using the coating composition including the second silane compound having a perfluorinated group may have a water contact angle after eraser wear of 95° or more.

The coating layer 120 having a large water contact angle according to an embodiment of the present disclosure may have excellent slip property and thus improved contamination prevention and removal properties. In addition, the coating layer 120 has excellent slip properties and thus can avoid being scratched in a scratch environment. As a result, scratch resistance of the coating layer 120 can be improved. In addition, the wear resistance of the coating layer 120 can be improved by the fluorine (F) included in the second silane compound.

Since the coating layer 120 prepared from the coating composition according to an embodiment of the present disclosure has a water contact angle after scratching of 98° or more, the surface of the coating layer 120 can exhibit excellent slip properties even after being exposed to a scratch environment. Accordingly, the contamination prevention and removal properties of the coating layer 120 can be maintained even after the coating layer 120 is exposed to the scratch environment.

The coating layer 120 produced using the coating composition according to an embodiment of the present disclosure has 2 or less scratches after exposure to a scratch environment. As such, the coating layer 120 can efficiently resist the scratch environment and exhibit excellent scratch resistance.

Since the coating layer 120 produced using the coating composition according to an embodiment of the present disclosure has a water contact angle after eraser wear of 95° or more, even if the coating layer 120 is exposed to a wear environment, it can exhibit excellent slip properties. As a result, the coating layer 120 can maintain excellent contamination prevention and removal properties even under the wear environment.

Examples of the second silane compound include 1H,1H,2H,2H-perfluoro-octyltriethoxysilane represented by Formula 5 and 1H,1H,2H,2H-perfluoro-decyltrimethoxysilane represented by Formula 6.

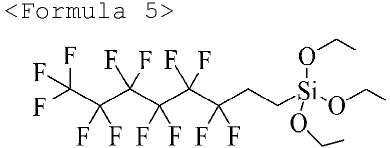

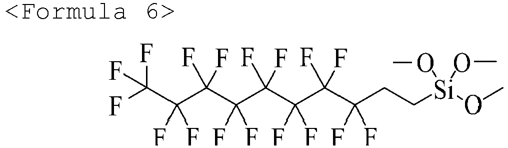

The coating composition according to the invention includes a third silane compound represented by Formula 3 in order to improve the mechanical strength, hardness, and scratch resistance of the coating layer 120.

According to the invention, the third silane compound has four alkoxy groups. As shown in Formula 3, the silane compound having four alkoxy groups is also called a "silane compound having a Q structure".

The coating layer 120 formed using the coating composition including the third silane compound includes a siloxane structure having a Q structure formed in a polymer chain of a siloxane resin, and as a result, the coating layer 120 exhibits excellent hardness and scratch resistance, comparable to glass.

The third silane compound may include, for example, at least one of tetraethyl orthosilicate (TEOS) and tetramethyl orthosilicate (TMOS).

The third silane compound is, for example, tetraethyl orthosilicate (TEOS) represented by the following Formula 7.

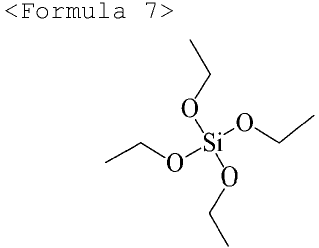

According to an embodiment of the present disclosure, the content of the first silane compound, the second silane compound and the third silane compound is increased in order to improve the abrasion resistance, scratch resistance, and water contact angle of the coating layer 120 formed using the coating composition.

For example, when the content of the first silane compound included in the coating composition is not sufficient, the coatability and curability of the coating composition may be deteriorated, and the thermal curing time may be greatly increased. In addition, when the content of the first silane compound is insufficient, scratch resistance of the coating layer may be deteriorated.

When the content of the second silane compound in the coating composition is insufficient, the water contact angle of the coating layer formed using the coating composition may be decreased and slip property may be deteriorated. Meanwhile, when the content of the second silane compound is excessively high, workability and coatability may be deteriorated.

The third silane compound serves to shorten the polymerization time of the coating composition and improve the abrasion resistance and scratch resistance of the coating layer 120. Meanwhile, when the content of the third silane compound is increased, the occurrence of curl of the coating layer 120 increases, and the flexibility and bendability of the coating layer 120 are deteriorated. Specifically, when the content of the third silane compound in the coating composition is excessively high, the flexibility of the coating layer 120 formed using the coating composition may be deteriorated. Meanwhile, when the content of the third silane compound is insufficient, the silane Q structure is not sufficiently formed in the polymer chain of the siloxane resin and thus the hardness, strength, and scratch resistance of the coating layer formed using the coating composition may be deteriorated.

In consideration of these characteristics, according to the invention, the coating composition includes 80 to 90 mol% of the first silane compound, 1 to 5 mol% of the second silane compound, and 7 to 15 mol% of the third silane compound, based on the total number of moles of the silane compound.

More specifically, according to an embodiment of the present disclosure, the coating composition may include 82 to 89 mol% of the first silane compound, 1 to 5 mol% of the second silane compound, and 8 to 12 mol% of the third silane compound based on the total number of moles of the silane compound.

The solvent allows the silane compound to be homogeneously mixed, so that the silane compound can be easily polymerized.

According to an embodiment of the present disclosure, the polymerization curing aid may be used in a greater amount than the silane compound based on the number of moles. For example, in order to provide smooth mixing and polymerization of the silane compound, the molar ratio of the silane compound to the polymerization curing aid may be in the range of 1:1.2 to 1:1.8 (silane compound:polymerization curing aid = 1:1.2 to 1:1.8). More specifically, the molar ratio of the silane compound to the polymerization curing aid may be in the range of 1:1.4 to 1:1.6 (silane compound:polymerization curing aid = 1:1.4 to 1:1.6).

According to an embodiment of the present disclosure, the silane compound may be used in a greater amount than the polymerization curing aid, based on the weight thereof. For example, in order to form the coating layer 120 having excellent physical properties, the weight ratio of the polymerization curing aid to the silane compound may be in the range of 1:3 to 1:6 (polymerization curing aid:silane compound = 1:3 to 1:6).

The coating composition according to the invention includes water (H₂O) as the polymerization curing aid. Water (H₂O) can be used as a binder between monomers for forming a siloxane resin and is involved in dehydration condensation.

The coating composition according to the invention also includes a diol as a polymerization curing aid. The diol serves to maintain the distance between the silane compounds during curing of the coating composition, and prevent the coating layer 120 or the coating film 100 from curling due to curing of the silane compounds. According to an embodiment of the present disclosure, linear diols may be used in order to maintain the spacing between the silane compounds.

According to one embodiment of the present disclosure, the diol may, for example, include at least one of ethylene glycol, 1,3-propanediol, and 1,4-butanediol.

The diol serves to suppress curling and increase the flexibility of the coating layer 120. However, when the content of the diol is increased, the polymerization time of the coating composition may increase and the abrasion resistance and scratch resistance of the coating layer 120 may be deteriorated. In consideration of these characteristics, the content of water (H₂O) and diol may be adjusted.

For example, water (H₂O) and diol may be used in a ratio of 1:0.5 to 1:0.9 based on moles (water:diol = 1:0.5 to 1:0.9). More specifically, the molar ratio of water (H₂O) to diol may be within the range of 1:0.6 to 1:0.8 (water:diol = 1:0.6 to 1:0.8).

According to an embodiment of the present disclosure, the diol may be used in a greater amount than water (H₂O) on a weight basis. For example, water (H₂O) and diol may be used in a weight ratio of 1:1.5 to 1:3 (water:diol = 1:1.5 to 1:3). More specifically, the weight ratio of water (H₂O) to diol may be in the range of 1:1.5 to 1:2.5 (water:diol = 1:1.5 to 1:2.5).

The coating composition according to an embodiment of the present disclosure may include a catalyst. The catalyst, for example, may promote the formation of the siloxane resin required for the formation of the coating layer 120.

According to an embodiment of the present disclosure, the catalyst may be an acid catalyst such as hydrochloric acid, acetic acid, hydrogen fluoride, nitric acid, sulfuric acid, or iodic acid, a basic catalyst such as ammonia, potassium hydroxide, sodium hydroxide, barium hydroxide, or imidazole, or an ion exchange resin such as AmberLite. These catalysts may be used alone or combination of two or more. The catalyst may be added in an amount of 0.0001 to about 10 parts by weight based on 100 parts by weight of the siloxane compound, but the content of the catalyst is not limited thereto.

The coating composition according to an embodiment of the present disclosure may include a basic catalyst. The basic catalyst may be sodium hydroxide (NaOH). The coating composition may include 0.05 to 0.1 parts by weight of the basic catalyst based on 100 parts by weight of the total weight of the silane compound.

The coating composition according to an embodiment of the present disclosure may further include at least one additive selected from the group consisting of a polymerization initiator, an antioxidant, a leveling agent, and a coating aid.

According to an embodiment of the present disclosure, the polymerization initiator is, for example, a photopolymerization initiator such as an organometallic salt or a thermal polymerization initiator such as amine or imidazole. The polymerization initiator may be used in an amount of about 0.01 to 2 parts by weight based on 100 parts by weight of the siloxane resin.

According to an embodiment, an organic solvent may be used to form the coating layer 120. The viscosity of the coating composition can be controlled by the organic solvent, and thus the processability of the coating composition can be controlled and the thickness of the coating layer 120 can be easily adjusted.

The organic solvent may include at least one selected from the group consisting of ketones including acetone, methyl ethyl ketone, methyl butyl ketone, cyclohexanone, cellosolves including methyl cellosolve and butyl cellosolve, ethers including ethyl ether and dioxane, alcohols including isobutyl alcohol, isopropyl alcohol, butanol, and methanol, halogenated hydrocarbons including dichloromethane, chloroform and trichloroethylene, and hydrocarbons including normal hexane, benzene, and toluene.

According to an embodiment of the present disclosure, the coating layer 120 may be formed by polymerization and curing of the coating composition.

More specifically, the coating composition is prepolymerized to form a prepolymer as a paste and an organic solvent is added to the prepolymer to prepare a coating composition having a controlled viscosity as a paste, the base film 110 is coated with the coating composition, and curing and polymerization are performed to form a coating layer 120.

In the process of forming the coating layer 120, a siloxane resin may be formed using the coating composition. For example, a siloxane resin may be formed by alkoxy diol substitution and condensation polymerization. In the process of forming the siloxane resin, substitution reaction (or hydrolysis) between alkoxy and water may occur and condensation polymerization may also occur. This reaction may be performed at room temperature, but stirring may be performed at 50°C to 120°C for 1 to 20 hours to promote reaction.

According to an embodiment of the present disclosure, the coating composition according to an embodiment of the present disclosure is coated and molded on the base film 110 using a method such as coating, casting, or molding, and then is photo- or heat-polymerized to form the coating layer 120.

When the coating composition is polymerized, the light dose suitable for photopolymerization is 50 mJ/cm² or more and 20,000 mJ/cm² or less, and heat-treatment is performed at a temperature of 40°C or more and about 200°C or less to obtain a uniform surface before light irradiation. In addition, the temperature suitable for thermal polymerization is 40°C or more and 200°C or less, and the temperature is not limited thereto.

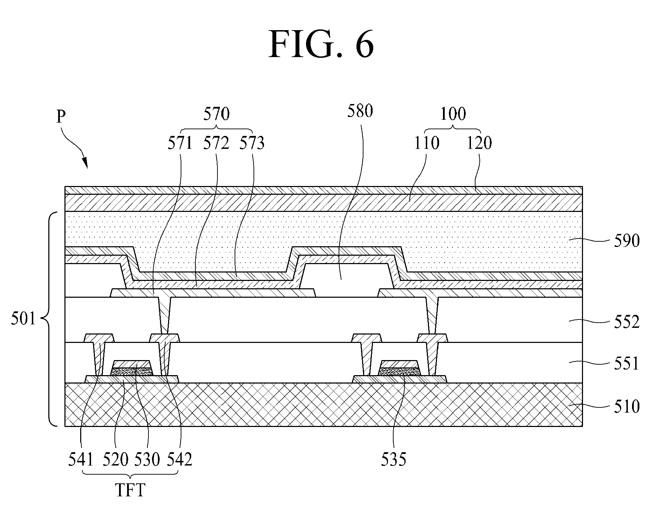

FIG. 5 is a cross-sectional view illustrating a part of a display device 200 according to another embodiment, and FIG. 6 is an enlarged cross-sectional view of "P" in FIG. 5.

Referring to FIG. 5, the display device 200 according to another embodiment of the present disclosure includes a display panel 501 and an coating film 100 on the display panel 501. FIG. 5 illustrates the display device 200 including the coating film 100 of FIG. 1.

Referring to FIGS. 5 and 6, the display panel 501 includes a substrate 510, a thin film transistor TFT on the substrate 510, and an organic light-emitting device 570 connected to the thin film transistor TFT. The organic light-emitting device 570 includes a first electrode 571, an organic light-emitting layer 572 on the first electrode 571, and a second electrode 573 on the organic light-emitting layer 572. The display device 200 shown in FIGS. 5 and 6 is an organic light-emitting display device.

The substrate 510 may be formed of glass or plastic. Specifically, the substrate 510 may be formed of plastic such as a polymer resin or an optical film.

Although not shown, a buffer layer may be disposed on the substrate 510.

The thin film transistor TFT is disposed on the substrate 510. The thin film transistor TFT includes a semiconductor layer 520, a gate electrode 530 that is insulated from the semiconductor layer 520 and at least partially overlaps the semiconductor layer 520, a source electrode 541 connected to the semiconductor layer 520, and a drain electrode 542 that is spaced apart from the source electrode 541 and is connected to the semiconductor layer 520.

Referring to FIG. 6, a gate insulating layer 535 is disposed between the gate electrode 530 and the semiconductor layer 520. An interlayer insulating layer 551 may be disposed on the gate electrode 530, and a source electrode 541 and a drain electrode 542 may be disposed on the interlayer insulating layer 551.

A planarization layer 552 is disposed on the thin film transistor TFT to planarize the top of the thin film transistor TFT.

A first electrode 571 is disposed on the planarization layer 552. The first electrode 571 is connected to the thin film transistor TFT through a contact hole provided in the planarization layer 552.

A bank layer 580 is disposed on the planarization layer 552 in a part of the first electrode 571 to define pixel areas or light-emitting areas. For example, the bank layer 580 is disposed in the form of a matrix at the boundaries between a plurality of pixels to define the respective pixel regions.

The organic light-emitting layer 572 is disposed on the first electrode 571. The organic light-emitting layer 572 may also be disposed on the bank layer 580. The organic light-emitting layer 572 may include one light-emitting layer, or two light-emitting layers stacked in a vertical direction. Light having any one color among red, green, and blue may be emitted from the organic light-emitting layer 572, and white light may be emitted therefrom.

The second electrode 573 is disposed on the organic light-emitting layer 572.

The first electrode 571, the organic light-emitting layer 572, and the second electrode 573 may be stacked to constitute the organic light-emitting device 570.

Although not shown, when the organic light-emitting layer 572 emits white light, each pixel may include a color filter for filtering the white light emitted from the organic light-emitting layer 572 based on a particular wavelength. The color filter is formed in the light path.

A thin-film encapsulation layer 590 may be disposed on the second electrode 573. The thin-film encapsulation layer 590 may include at least one organic layer and at least one inorganic layer, and the at least one organic layer and the at least one inorganic layer may be alternately disposed.

The coating film 100 is disposed on the display panel 501 having the stack structure described above. The coating film 100 may be used as a cover window to cover and protect the light emitting surface of the display panel 501.

Hereinafter, the present disclosure will be described in more detail with reference to exemplary examples and comparative examples. However, the following examples and comparative examples should not be construed as limiting the scope of the present disclosure.

### <Comparative Example 1>

148 g (1 mol) of vinyltrimethoxysilane (Shin-Etsu Silicone Co. Ltd., KBM-1003), 27 g (1.5 mol) of water (H₂O), and 0.1 g of NaOH (Samjeon Chemical Co., Ltd.) were added to a 500 mL flask and stirred using a mechanical stirrer at 100 rpm at 65°C for 5 hours to prepare a prepolymer.

10 g of the prepared prepolymer was mixed with 10 g of methyl ethyl ketone (MEK) as an organic solvent and 0.1 g of IRGACURE 184 (BASF) as a photoinitiator to prepare a coating composition as a paste. The paste of the prepared coating composition was applied to a polyimide-based film (CPI^{®}, KOLON Corporation) having a thickness of 50 µm, as the base film 110, using Mayer Bar No. 8 to mold the coating layer 120. As a result, an uncured coating film was prepared.

The uncured coating film was dried in an oven at 100°C for 10 minutes and exposed to light (150 mW/cm², 2J/cm²) for 30 seconds using an ultraviolet lamp to obtain a cured coating layer 120. As a result, the coating film 100 including the coating layer 120 having a thickness of 10 µm was completed.

### <Comparative Example 2>

A coating film 100 was produced in the same manner as in Comparative Example 1, except that 148 g (1 mol) of vinyltrimethoxysilane (Shin-Etsu Silicone Co. Ltd., KBM-1003), 19 g (1.05 mol) of water (H₂O), 28 g (0.45 mol) of ethylene glycol (EG, Sigma Aldrich), and 0.1 g of NaOH (Samjeon Chemical Co., Ltd.) were added to a 500 mL flask and stirred at 65°C for 7 hours to prepare a prepolymer (molar ratio of H₂O:EG=7:3).

### <Comparative Example 3>

A coating film 100 was produced in the same manner as in Comparative Example 1, except that 148 g (1 mol) of vinyltrimethoxysilane (Shin-Etsu Silicone Co. Ltd., KBM-1003), 16 g (0.9 mol) of water (H₂O), 37 g (0.6 mol) of ethylene glycol (EG, Sigma Aldrich), and 0.1 g of NaOH (Samjeon Chemical Co., Ltd.) were added to a 500 mL flask and stirred at 65°C for 10 hours to prepare a prepolymer (molar ratio of H₂O:EG=6:4).

### <Comparative Example 4>

A coating film 100 was produced in the same manner as in Comparative Example 1, except that 148 g (1 mol) of vinyltrimethoxysilane (Shin-Etsu Silicone Co. Ltd., KBM-1003), 14 g (0.75 mol) of water (H₂O), 47 g (0.75 mol) of ethylene glycol (EG, Sigma Aldrich), and 0.1 g of NaOH (Samjeon Chemical Co., Ltd.) were added to a 500 mL flask and stirred at 65°C for 12 hours to prepare a prepolymer (molar ratio of H₂O:EG=5:5).

### <Comparative Example 5>

A coating film 100 was produced in the same manner as in Comparative Example 1, except that 148 g (1 mol) of vinyltrimethoxysilane (Shin-Etsu Silicone Co. Ltd., KBM-1003), 11 g (0.6 mol) of water (H₂O), 56 g (0.9 mol) of ethylene glycol (EG, Sigma Aldrich), and 0.1 g of NaOH (Samjeon Chemical Co., Ltd.) were added to a 500 mL flask and stirred at 65°C for 24 hours to prepare a prepolymer (molar ratio of H₂O:EG=4:6).

### <Comparative Example 6>

A coating film 100 was produced in the same manner as in Comparative Example 1, except that 147 g (0.99 mol) of vinyltrimethoxysilane (Shin-Etsu Silicone Co. Ltd., KBM-1003), 2 g (0.01 mol) of TEOS (Evonik Industries AG), 16 g (0.9 mol) of water (H₂O), 37 g (0.6 mol) of ethylene glycol (EG, Sigma Aldrich), and 0.1 g of NaOH were added to a 500 mL flask and stirred at 65°C for 9 hours to prepare a prepolymer (molar ratio of KBM-1003:TEOS = 99:1, H₂O:EG=6:4).

### <Comparative Example 7>

A coating film 100 was produced in the same manner as in Comparative Example 1, except that 141 g (0.95 mol) of vinyltrimethoxysilane (Shin-Etsu Silicone Co. Ltd., KBM-1003), 10 g (0.05 mol) of TEOS (Evonik Industries AG), 16 g (0.915 mol) of water (H₂O), 38 g (0.61 mol) of ethylene glycol (EG, Sigma Aldrich), and 0.1 g of NaOH (Samjeon Chemical Co., Ltd.) were added to a 500 mL flask and stirred at 65°C for 8 hours to prepare a prepolymer (molar ratio of KBM-1003:TEOS = 95:5, H₂O:EG=6:4).

### <Comparative Example 8>

A coating film 100 was produced in the same manner as in Comparative Example 1, except that 133 g (0.9 mol) of vinyltrimethoxysilane (Shin-Etsu Silicone Co. Ltd., KBM-1003), 21 g (0.1 mol) of TEOS (Evonik Industries AG), 16 g (0.93 mol) of water (H₂O), 38 g (0.62 mol) of ethylene glycol (EG, Sigma Aldrich), and 0.1 g of NaOH were added to a 500 mL flask and stirred at 65°C for 8 hours to prepare a prepolymer (molar ratio of KBM-1003:TEOS = 9:1, H₂O:EG=6:4).

### <Comparative Example 9>

A coating film 100 was produced in the same manner as in Comparative Example 1, except that 119 g (0.8 mol) of vinyltrimethoxysilane (Shin-Etsu Silicone Co. Ltd., KBM-1003), 42 g (0.2 mol) of TEOS (Evonik Industries AG), 17 g (0.96 mol) of water (H₂O), 40 g (0.64 mol) of ethylene glycol (EG, Sigma Aldrich), and 0.1 g of NaOH (Samjeon Chemical Co., Ltd.) were added to a 500 mL flask and stirred at 65°C for 6 hours to prepare a prepolymer (molar ratio of KBM-1003:TEOS = 8:2, H₂O:EG=6:4).

### <Comparative Example 10>

A coating film 100 was produced in the same manner as in Comparative Example 1, except that 104 g (0.7 mol) of vinyltrimethoxysilane (Shin-Etsu Silicone Co. Ltd., KBM-1003), 62 g (0.3 mol) of TEOS (Evonik Industries AG), 18 g (0.99 mol) of water (H₂O), 41 g (0.66 mol) of ethylene glycol (EG, Sigma Aldrich), and 0.1 g of NaOH (Samjeon Chemical Co., Ltd.) were added to a 500 mL flask and stirred at 65°C for 5 hours to prepare a prepolymer (molar ratio of KBM-1003:TEOS = 7:3, H₂O:EG=6:4).

### <Comparative Example 11>

A coating film 100 was produced in the same manner as in Comparative Example 1, except that 133 g (0.895 mol) of vinyltrimethoxysilane (Shin-Etsu Silicone Co. Ltd., KBM-1003), 21 g (0.1 mol) of TEOS (Evonik Industries AG), 3g (0.005 mol) of 1H,1H,2H,2H-perfluoro-octyltriethoxysilane (Sigma Aldrich), 17 g (0.93 mol) of water (H₂O), 39 g (0.62 mol) of ethylene glycol (EG, Sigma Aldrich), and 0.1 g of NaOH were added to a 500 mL flask and stirred at 65°C for 8 hours to prepare a prepolymer (content of second silane compound in silane compound: 0.5 mol%).

### <Example 1>

A coating film 100 was produced in the same manner as in Comparative Example 1, except that 132 g (0.89 mol) of vinyltrimethoxysilane (Shin-Etsu Silicone Co. Ltd., KBM-1003), 21 g (0.1 mol) of TEOS (Evonik Industries AG), 5g (0.01 mol) of 1H,1H,2H,2H-perfluoro-octyltriethoxysilane (Sigma Aldrich), 17 g (0.93 mol) of water (H₂O), 39 g (0.62 mol) of ethylene glycol (EG, Sigma Aldrich), and 0.1 g of NaOH were added to a 500 mL flask and stirred at 65°C for 8 hours to prepare a prepolymer (molar ratio of 1H,1H,2H,2H-perfluoro-octyltriethoxysilane, second silane compound in the silane compound: 1.0%).

### <Example 2>

A coating film 100 was produced in the same manner as in Comparative Example 1, except that 129 g (0.87 mol) of vinyltrimethoxysilane (Shin-Etsu Silicone Co. Ltd., KBM-1003), 21 g (0.1 mol) of TEOS (Evonik Industries AG), 15g (0.03 mol) of 1H,1H,2H,2H-perfluoro-octyltriethoxysilane (Sigma Aldrich), 17 g (0.93 mol) of water (H₂O), 39 g (0.62 mol) of ethylene glycol (EG, Sigma Aldrich), and 0.1 g of NaOH were added to a 500 mL flask and stirred at 65°C for 8 hours to prepare a prepolymer (molar ratio of 1H,1H,2H,2H-perfluoro-octyltriethoxysilane, second silane compound in the silane compound: 3.0%).

### <Example 3>

A coating film 100 was produced in the same manner as in Comparative Example 1, except that 126 g (0.85 mol) of vinyltrimethoxysilane (Shin-Etsu Silicone Co. Ltd., KBM-1003), 21 g (0.1 mol) of TEOS (Evonik Industries AG), 26g (0.05 mol) of 1H,1H,2H,2H-perfluoro-octyltriethoxysilane (Sigma Aldrich), 17 g (0.93 mol) of water (H₂O), 39 g (0.62 mol) of ethylene glycol (EG, Sigma Aldrich), and 0.1 g of NaOH were added to a 500 mL flask and stirred at 65°C for 8 hours to prepare a prepolymer (molar ratio of 1H,1H,2H,2H-perfluoro-octyltriethoxysilane, second silane compound in the silane compound: 5.0%).

### <Comparative Example 12>

A coating film 100 was produced in the same manner as in Comparative Example 1, except that 119 g (0.8 mol) of vinyltrimethoxysilane (Shin-Etsu Silicone Co. Ltd., KBM-1003), 21 g (0.1 mol) of TEOS (Evonik Industries AG), 51g (0.1 mol) of 1H,1H,2H,2H-perfluoro-octyltriethoxysilane (Sigma Aldrich), 17 g (0.93 mol) of water (H₂O), 39 g (0.62 mol) of ethylene glycol (EG, Sigma Aldrich), and 0.1 g of NaOH were added to a 500 mL flask and stirred at 65°C for 8 hours to prepare a prepolymer (molar ratio of 1H,1H,2H,2H-perfluoro-octyltriethoxysilane, second silane compound in the silane compound: 10%).

The molar ratio of each of components constituting the coating compositions according to Comparative Examples 1 to 12 and Examples 1 to 3 and the weight average molecular weight and polydispersity index (PDI) of the prepolymers are shown in Table 1.

**[Table 1]**

| No. | First silane compound (KBM-1103) | Second silane compound | Third silane compound (TEOS) | H₂O | EG | Polymerization time (h) | Weight average molecular weight | PDI |
|---|---|---|---|---|---|---|---|---|
| Comparative Example 1 | 1.000 | 0 | 0 | 1.500 | 0 | 5 | 9230 | 2.3 |
| Comparative Example 2 | 1.000 | 0 | 0 | 1.050 | 0.450 | 7 | 7235 | 1.8 |
| Comparative Example 3 | 1.000 | 0 | 0 | 0.900 | 0.600 | 10 | 6334 | 1.7 |
| Comparative Example 4 | 1.000 | 0 | 0 | 0.750 | 0.750 | 12 | 5460 | 1.4 |
| Comparative Example 5 | 1.000 | 0 | 0 | 0.600 | 0.900 | 24 | 5520 | 1.5 |
| Comparative Example 6 | 0.990 | 0 | 0.010 | 0.903 | 0.602 | 9 | 6532 | 1.8 |
| Comparative Example 7 | 0.950 | 0 | 0.050 | 0.915 | 0.610 | 8 | 7230 | 1.7 |
| Comparative Example 8 | 0.900 | 0 | 0.100 | 0.930 | 0.620 | 8 | 5930 | 1.6 |
| Comparative Example 9 | 0.800 | 0 | 0.200 | 0.960 | 0.640 | 6 | 6835 | 1.9 |
| Comparative Example 10 | 0.700 | 0 | 0.300 | 0.990 | 0.660 | 5 | 6199 | 1.5 |
| Comparative Example 11 | 0.895 | 0.005 | 0.100 | 0.930 | 0.620 | 8 | 6532 | 1.5 |
| Example 1 | 0.890 | 0.010 | 0.100 | 0.930 | 0.620 | 8 | 7354 | 1.7 |
| Example 2 | 0.870 | 0.030 | 0.100 | 0.930 | 0.620 | 8 | 6719 | 1.5 |
| Example 3 | 0.850 | 0.050 | 0.100 | 0.930 | 0.620 | 8 | 6435 | 1.8 |
| Comparative Example 12 | 0.800 | 0.100 | 0.100 | 0.930 | 0.620 | 8 | 6452 | 1.6 |

### <Comparative Example 13>

A coating film 100 was produced in the same manner as in Comparative Example 1, except that 221 g (0.89 mol) of 3-methacryloxypropyltrimethoxysilane (Shin-Etsu Silicone Co. Ltd., KBM-503), 21 g (0.1 mol) of TEOS (Evonik Industries AG), 5g (0.01 mol) of 1H,1H,2H,2H-perfluoro-octyltriethoxysilane (Sigma Aldrich), 17 g (0.93 mol) of water (H₂O), 39 g (0.62 mol) of ethylene glycol (EG, Sigma Aldrich), and 0.1 g of NaOH were added to a 500 mL flask and stirred at 65°C for 8 hours to prepare a prepolymer (molar ratio of 1H,1H,2H,2H-perfluoro-octyltriethoxysilane in the silane compound: 1%).

### <Comparative Example 14>

A coating film 100 was produced in the same manner as in Comparative Example 1, except that 216 g (0.87 mol) of 3-methacryloxypropyltrimethoxysilane (Shin-Etsu Silicone Co. Ltd., KBM-503), 21 g (0.1 mol) of TEOS (Evonik Industries AG), 15 g (0.03 mol) of 1H,1H,2H,2H-perfluoro-octyltriethoxysilane (Sigma Aldrich), 17 g (0.93 mol) of water (H₂O), 39 g (0.62 mol) of ethylene glycol (EG, Sigma Aldrich), and 0.1 g of NaOH were added to a 500 mL flask and stirred using a mechanical stirrer at 65°C for 8 hours to prepare a prepolymer (molar ratio of 1H,1H,2H,2H-perfluoro-octyltriethoxysilane in the silane compound: 3%).

### <Comparative Example 15>

A coating film 100 was produced in the same manner as in Comparative Example 1, except that 211 g (0.85 mol) of 3-methacryloxypropyltrimethoxysilane (Shin-Etsu Silicone Co. Ltd., KBM-503), 21 g (0.1 mol) of TEOS (Evonik Industries AG), 26 g (0.05 mol) of 1H,1H,2H,2H-perfluoro-octyltriethoxysilane (Sigma Aldrich), 17 g (0.93 mol) of water (H₂O), 39 g (0.62 mol) of ethylene glycol (EG, Sigma Aldrich), and 0.1 g of NaOH were added to a 500 mL flask and stirred at 65°C for 8 hours to prepare a prepolymer (molar ratio of 1H,1H,2H,2H-perfluoro-octyltriethoxysilane in the silane compound: 5%).

The molar ratio of each of components constituting the coating compositions according to Comparative Examples 12 to 14 and the weight average molecular weight and polydispersity index (PDI) of the prepolymers thereof are shown in Table 2.

**[Table 2]**

| No. | Comparative silane compound (KBM-503) | Second silane compound | Third silane compound (TEOS) | H₂O | EG | Polymerization time (h) | Weight average molecular weight | PDI |
|---|---|---|---|---|---|---|---|---|
| Comparative Example 13 | 0.890 | 0.010 | 0.100 | 0.930 | 0.620 | 8 | 6270 | 1.7 |
| Comparative Example 14 | 0.870 | 0.030 | 0.100 | 0.930 | 0.620 | 8 | 5823 | 1.4 |
| Comparative Example 15 | 0.850 | 0.050 | 0.100 | 0.930 | 0.620 | 8 | 5946 | 1.5 |

### <Comparative Example 16>

A coating film 100 was produced in the same manner as in Comparative Example 8, except that 3% by weight of KY-1203 (Shinetsu Corporation), which is a fluorinated anti-smudge additive, was added to the coating composition based on the total weight of the silane compound.

### <Example 4>

A coating film 100 was produced in the same manner as in Example 2, except that 3% by weight of KY-1203 (Shinetsu Corporation), which is a fluorinated anti-smudge additive, was added to the coating composition based on the total weight of the silane compound.

### <Comparative Example 17>

A coating film 100 was produced in the same manner as in Comparative Example 13, except that 3% by weight of KY-1203 (Shinetsu Corporation), which is a fluorinated anti-smudge additive, was added to the coating composition based on the total weight of the silane compound.

### <Measurement Example>

The physical properties of the coating films prepared in Examples 1 to 4 and Comparative Examples 1 to 17 were measured in accordance with the following method and the results are shown in Table 3 below.

### (1) Water contact angle

As shown in FIG. 2, using an MSA (Mobile Surface Analyzer) from KRUSS GmbH, a 5 µl water droplet WD was dropped on the surface of the coating layer 120 at a rate of 2.7 µl/sec, the angle θ between the surface of the coating layer 120 and the boundary of the water droplet WD was measured 7 times at an interval of 0.2 seconds, this measurement was repeated 5 times, and the average of the five measured values was set as the water contact angle.

In Table 3, the water contact angle is represented as the initial water contact angle.

### (2) Number of scratches

The coating film 100 was cut into a size of 100 mm x 50 mm to obtain a coating film sample, the coating film sample was fixed onto a flat surface using an adhesive tape (3M company) such that the coating layer 120 faced upward, a 20 mm x 20 mm stainless steel (SUS) jig covered with #0000 (LIBERON Corporation) nonwoven fabric was reciprocated on the surface of the coating layer 120 of the coating film sample 10,000 times at a load of 0.5 kgf and a speed of 45 RPM, and the number of scratches counted by the naked eye was recorded.

### (3) Water contact angle after scratching

The coating film 100 was cut into a size of 100 mm x 50 mm to obtain a coating film sample, the coating film sample was fixed onto a flat surface using an adhesive tape (3M company) such that the coating layer 120 faced upward, and a 20 mm x 20 mm stainless steel (SUS) jig covered with #0000 (LIBERON Corporation) nonwoven fabric was reciprocated on the surface of the coating layer 120 of the coating film sample 10,000 times at a load of 0.5 kgf and a speed of 45 RPM to form scratches. Then, the water contact angle of the scratched coating film sample was measured in accordance with the method of (1) above.

### (4) Water contact angle after eraser wear

The coating film 100 was cut into a size of 200 mm x 50 mm to obtain a coating film sample, the coating film sample was fixed onto a flat surface using an adhesive tape (3M company) such that the coating layer 120 faced upward, a Manaslu eraser was fixed to a jig, the jig was reciprocated on the surface of the coating layer 120 of the coating film sample 1,000 times at a load of 0.5 kgf and a speed of 45 RPM, and then a water contact angle was measured in accordance with the method of (1).

### (5) Curl

Curl was measured as the distance between the edge of the coating film 100 cut into a square having a size of 100 mm x 100 mm, which was placed on a flat glass substrate, and the bottom of the glass substrate (see "curl" in FIG. 3).

### (6) Crack point radius (R)

The coating film 100 was cut to a size of 20 mm x 100 mm to prepare a coating film sample, the coating film sample was mounted on a radius bending tester such that the coating layer 120 faced away from the bent coating film sample 100, and the radius of curvature when cracks occurred in the coating film sample was measured while bending the coating film sample at a gradually reduced radius of curvature (see FIG. 4).

**[Table 3]**

| No. | Water contact angle (initial)(°) | Number of scratches | Water contact angle after scratching (°) | Water contact angle after eraser wear (°) | Curl (mm) | Crack point radius (R) (mm) |
|---|---|---|---|---|---|---|
| Comparative Example 1 | 70 | 20 | 60 | 54 | 23 | 4.0 |
| Comparative Example 2 | 74 | more than 30 | 58 | 53 | 12 | 2.0 |
| Comparative Example 3 | 73 | more than 30 | 57 | 55 | 0 | less than 1.0 |
| Comparative Example 4 | 75 | more than 30 | 55 | 54 | 0 | less than 1.0 |
| Comparative Example 5 | 74 | more than 30 | 55 | 53 | 0 | less than 1.0 |
| Comparative Example 6 | 76 | 10 | 64 | 60 | 0 | less than 1.0 |
| Comparative Example 7 | 78 | 6 | 63 | 62 | 0 | less than 1.0 |
| Comparative Example 8 | 77 | 4 | 65 | 64 | 0 | less than 1.0 |
| Comparative Example 9 | 77 | 4 | 66 | 63 | 5 | 2.0 |
| Comparative Example 10 | 79 | 4 | 64 | 65 | 8 | 2.5 |
| Comparative Example 11 | 95 | 2 | 85 | 77 | 0 | less than 1.0 |
| Example 1 | 106 | 0 | 102 | 100 | 0 | less than 1.0 |
| Example 2 | 112 | 0 | 106 | 102 | 0 | less than 1.0 |
| Example 3 | 112 | 0 | 104 | 98 | 0 | less than 1.0 |
| Comparative Example 12 | 113 | 4 | 95 | 82 | 0 | less than 1.0 |
| Comparative Example 13 | 102 | 2 | 77 | 65 | 0 | less than 1.0 |
| Comparative Example 14 | 108 | 4 | 76 | 64 | 0 | less than 1.0 |
| Comparative Example 15 | 108 | 4 | 73 | 58 | 0 | less than 1.0 |
| Comparative Example 16 | 112 | 6 | 74 | 68 | 0 | less than 1.0 |
| Example 4 | 112 | 0 | 105 | 100 | 0 | not more than 1.0 |
| Comparative Example 17 | 112 | 6 | 70 | 60 | 0 | not more than 1.0 |

As can be seen from Table 3, the coating films 100 according to Examples 1 to 4 have a water contact angle of 100° or more, 2 scratches, a water contact angle after scratching of 98° or more, a water contact angle after eraser wear of 95° or more, a curl of 2 mm or less, and a crack point radius (R) of 1 mm or less.

In addition, the coating films 100 according to Examples 1 to 4 had the difference of 10° or less between the water contact angle and the water contact angle after scratching, and the difference of 10° or less between the water contact angle and the water contact angle after eraser wear.

As described above, the coating film according to an embodiment of the present disclosure is useful as a cover window or a protective film because it has a high water contact angle and thus exhibits excellent slip property, contamination prevention and removal properties, and superior scratch resistance and abrasion resistance.

### [Description of reference numerals]

100: Coating film
110: Base film
120: Coating layer
501: Display panel
570: Organic light-emitting device
TFT: Thin film transistor
WD: Water droplet
201: Glass substrate

## Claims

1. A coating composition comprising:
a silane compound; and
a polymerization curing aid,
wherein the silane compound comprises:
80 to 90 mol% of a first silane compound represented by the following Formula 1;
1 to 5 mol% of a second silane compound represented by the following Formula 2; and
7 to 15 mol% of a third silane compound represented by the following Formula 3, and
the polymerization curing aid comprises:
a diol; and
water (H₂O), 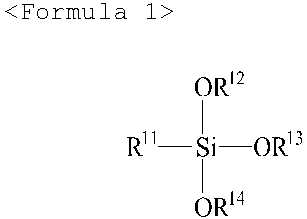 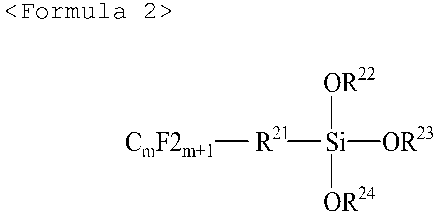
<Formula 3> Si(OR³)₄
wherein R¹¹ is a substituted or unsubstituted C2-C5 unsaturated hydrocarbon group;
R¹², R¹³ and R¹⁴ are each independently a C1-C5 alkyl group;
R²¹ is a single bond or a C1-C4 alkylene group;
R²², R²³ and R²⁴ are each independently a C1-C5 alkyl group;
m is an integer of 3 to 10; and
R³ is a C1-C4 alkyl group.

2. The coating composition according to claim 1, wherein a molar ratio of the silane compound to the polymerization curing aid is 1:1.2 to 1:1.8.

3. The coating composition according to claim 1, wherein the first silane compound comprises vinyltrimethoxysilane represented by the following Formula 4:

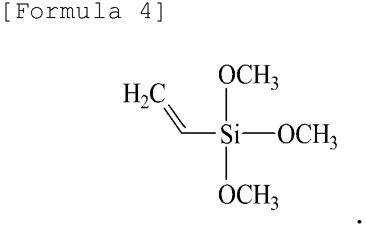

4. The coating composition according to claim 1, wherein the second silane compound comprises at least one selected from 1H,1H,2H,2H-perfluoro-octyltriethoxysilane, 1H,1H,2H,2H-perfluoro-octyltrimethoxysilane, 1H,1H,2H,2H-perfluoro-decyltrimethoxysilane and 1H,1H,2H,2H-perfluoro-decyltriethoxysilane,
wherein the third silane compound comprises at least one of tetraethyl orthosilicate (TEOS) and tetramethyl orthosilicate (TMOS), or
wherein the diol comprises at least one of ethylene glycol, 1,3-propanediol, and 1,4-butanediol.

5. The coating composition according to claim 1, further comprising a basic catalyst, and
wherein the basic catalyst is present in an amount of 0.05 to 0.1 parts by weight based on 100 parts by weight of the total weight of the silane compound.

6. A coating film (100) comprising:
a base film (110); and
a coating layer (120) formed on the base film (110),
wherein the coating layer (120) is formed using the coating composition according to any one of claims 1 to 5.

## Patentansprüche

1. Beschichtungszusammensetzung, umfassend:
eine Silanverbindung; und
ein Polymerisationshärtungshilfsmittel,
wobei die Silanverbindung umfasst:
80 bis 90 Mol-% einer ersten Silanverbindung, dargestellt durch die folgende Formel 1;
1 bis 5 Mol-% einer zweiten Silanverbindung, dargestellt durch die folgende Formel 2; und
7 bis 15 Mol-% einer dritten Silanverbindung, dargestellt durch die folgende Formel 3, und
das Polymerisationshärtungshilfsmittel umfasst:
ein Diol; und
Wasser
(H₂O), 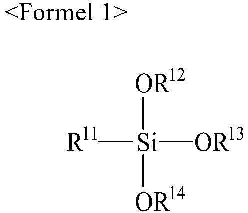 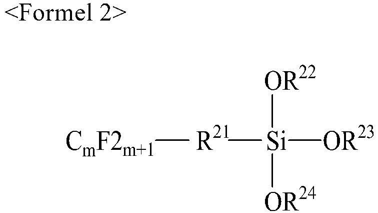
<Formel 3> Si(OR³)₄
wobei R¹¹ eine substituierte oder unsubstituierte ungesättigte C2-C5-Kohlenwasserstoffgruppe ist;
R¹², R¹³ und R¹⁴ jeweils unabhängig voneinander eine C1-C5-Alkylgruppe sind;
R²¹ eine Einfachbindung oder eine C1-C4-Alkylengruppe ist;
R²², R²³ und R²⁴ jeweils unabhängig voneinander eine C1-C5-Alkylgruppe sind;
m eine ganze Zahl von 3 bis 10 ist; und
R³ eine C1-C4-Alkylgruppe ist.

2. Beschichtungszusammensetzung nach Anspruch 1, wobei das Molverhältnis der Silanverbindung zum Polymerisationshärtungshilfsmittel 1:1,2 bis 1:1,8 beträgt.

3. Beschichtungszusammensetzung nach Anspruch 1, wobei die erste Silanverbindung Vinyltrimethoxysilan, dargestellt durch die folgende Formel 4, umfasst:

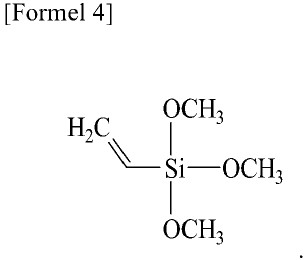

4. Beschichtungszusammensetzung nach Anspruch 1, wobei die zweite Silanverbindung mindestens eine, ausgewählt aus 1H,1H,2H,2H-Perfluoroctyltriethoxysilan, 1H,1H,2H,2H-Perfluoroctyltrimethoxysilan, 1H,1H,2H,2H-Perfluordecyltrimethoxysilan und 1H,1H,2H,2H-Perfluordecyltriethoxysilan, umfasst,
wobei die dritte Silanverbindung mindestens eines aus Tetraethylorthosilikat (TEOS) und Tetramethylorthosilikat (TMOS) umfasst, oder
wobei das Diol mindestens eines aus Ethylenglykol, 1,3-Propandiol und 1,4-Butandiol umfasst.

5. Beschichtungszusammensetzung nach Anspruch 1, ferner umfassend einen basischen Katalysator, und
wobei der basische Katalysator in einer Menge von 0,05 bis 0,1 Gewichtsteilen, bezogen auf 100 Gewichtsteile des Gesamtgewichts der Silanverbindung, vorliegt.

6. Beschichtungsfilm (100), umfassend:
einen Basisfilm (110); und
eine auf dem Basisfilm (110) gebildete Beschichtungsschicht (120),
wobei die Beschichtungsschicht (120) unter Verwendung der Beschichtungszusammensetzung nach einem der Ansprüche 1 bis 5 gebildet ist.

## Revendications

1. Composition de revêtement comportant :
un composé silane ; et
un agent de durcissement par polymérisation,
dans laquelle le composé silane comporte :
80 à 90 % en moles d'un premier composé silane représenté par la Formule 1 suivante;
1 à 5 % en moles d'un deuxième composé silane représenté par la Formule 2 suivante ; et
7 à 15 % en moles d'un troisième composé silane représenté par la Formule 3 suivante, et
l'agent de durcissement par polymérisation comporte :
un diol ; et
de l'eau (H₂O), 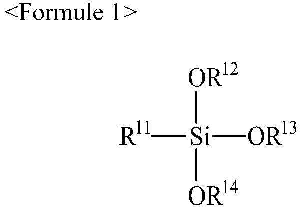 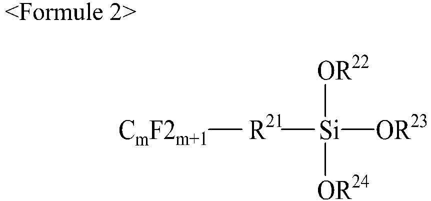
<Formule 3> Si(OR³)₄
dans lesquelles R¹¹ est un groupe hydrocarbure insaturé en C₂ à C₅ substitué ou non substitué ;
R¹², R¹³ et R¹⁴ sont chacun, indépendamment les uns des autres, un groupe alkyle en C₁ à C₅ ;
R²¹ est une liaison simple ou un groupe alkylène en C₁ à C₄ ;
R²², R²³ et R²⁴ sont chacun, indépendamment les uns des autres, un groupe alkyle en C₁ à C₅ ;
m est un entier de 3 à 10 ; et
R³ est un groupe alkyle en C₁ à C₄.

2. Composition de revêtement selon la revendication 1, dans laquelle un rapport molaire du composé silane sur l'agent de durcissement par polymérisation est de 1:1,2 à 1:1,8.

3. Composition de revêtement selon la revendication 1, dans laquelle le premier composé silane comporte du vinyltriméthoxysilane représenté par la Formule 4 suivante :

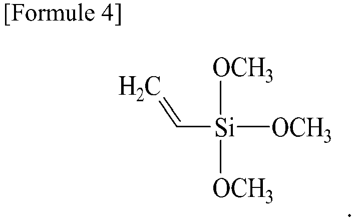

4. Composition de revêtement selon la revendication 1, dans laquelle le deuxième composé silane comporte au moins un élément choisi parmi 1H,1H,2H,2H-perfluoro-octyltriéthoxysilane, 1H,1H,2H,2H-perfluoro-octyltriméthoxysilane, 1H,1H,2H,2H-perfluoro-décyltriméthoxysilane et 1H,2H,2H-perfluoro-décyltriéthoxysilane,
dans laquelle le troisième composé de silane comporte au moins un élément parmi de l'orthosilicate de tétraéthyle (TEOS) et de l'orthosilicate de tétraméthyle (TMOS), ou
dans laquelle le diol comporte au moins un élément parmi de l'éthylène glycol, du 1,3-propanediol et du 1,4-butanediol.

5. Composition de revêtement selon la revendication 1, comportant en outre un catalyseur basique, et
dans laquelle le catalyseur basique est présent en une quantité de 0,05 à 0,1 partie en poids sur la base de 100 parties en poids du poids total du composé silane.

6. Film de revêtement (100) comportant :
un film de base (110) ; et
une couche de revêtement (120) formée sur le film de base (110),
dans lequel la couche de revêtement (120) est formée en utilisant la composition de revêtement selon l'une quelconque des revendications 1 à 5.
